# FASCICULE DE BREVET EUROPEEN

(11) **EP 2 064 900 B1**
(45) Date de publication et mention de la délivrance du brevet: **28.08.2013**
(21) Numéro de dépôt: 07848335.1
(22) Date de dépôt: 18.09.2007
(51) Int. Cl.: H04Q 3/00, H04M 7/12

(54) **PROCEDE DE TRANSFERT D'UN FLUX AUDIO ENTRE PLUSIEURS TERMINAUX**
VERFAHREN ZUR ÜBERTRAGUNG EINES AUDIOSTROMS ZWISCHEN MEHREREN ENDGERÄTEN
METHOD FOR TRANSFERRING AN AUDIO STREAM BETWEEN A PLURALITY OF TERMINALS

(30) Priorité: 20.09.2006 FR 0653844
(43) Date de publication de la demande: 03.06.2009
(73) Titulaire: FRANCE TELECOM, 75015 Paris (FR)
(72) Inventeur: BOUVET, Bertrand, F-22700 Perros-Guirec (FR); SOLLAUD, Aurélien, F-22560 Trebeurden (FR); PAGEOT, Jean-Marc, F-22660 Trelevern (FR)
(74) Mandataire: Delumeau, François Guy
(86) Numéro de dépôt international: PCT/FR2007/051963
(87) Numéro de publication internationale: WO 2008/035008

(56) Documents cités:
- US-A- 6 078 669
- US-B1- 6 408 327
- US-B1- 6 973 184

## Description

Dans le domaine des télécommunications, l'invention concerne un procédé de transfert d'un flux audio entre au moins deux terminaux.

L'invention trouve une application par exemple dans le domaine de la téléphonie ou de la visiophonie, en mode point à point entre deux dispositifs ou en mode conférence impliquant plus de deux dispositifs, incluant des terminaux, des serveurs vocaux de type messagerie, audiotel, portail, etc.

L'invention est notamment intéressante dans le cadre d'une communication téléphonique ou visiophonique entre :
- d'une part au moins un dispositif connecté à un réseau de type VoIP (pour Voix sur IP, ou Voix sur réseau IP, ou téléphonie IP ou téléphonie sur Internet) de nouvelle génération permettant le transport de flux vocaux à plusieurs canaux, par exemple des flux stéréophoniques, et
- d'autre part au moins un dispositif connecté à un réseau de téléphonie traditionnel permettant seulement le transport de flux vocaux monophoniques (c'est-à-dire à un unique canal), comme par exemple un Réseau Téléphonique Commuté RTC, un Réseau Numérique à Intégration de Services RNIS, un réseau téléphonique privé d'entreprise interconnecté au réseau public via un dispositif de type PABX (abréviation bien connue de l'homme du métier de l'expression anglaise "Private Automatic Branch eXchange"), un réseau mobile de type GSM ou un service de Voix sur IP traditionnel monophonique.

Plus généralement, l'invention trouve une application pour toute communication entre au moins deux dispositifs, dont l'un au moins dispose de capacités de traitement de flux audio comprenant un nombre de canaux supérieur au nombre de canaux d'un flux audio susceptible d'être traité par l'autre des dispositifs.

Par capacité (ou propriété) audio, on entend ici la capacité, pour un dispositif ou un réseau, de produire, de transmettre, de recevoir et/ou d'exploiter un flux audio multi-canal de N canaux, N étant un nombre entier supérieur ou égal à 1.

Le service téléphonique actuel s'appuie encore très largement sur des réseaux de communication fixe ou mobile de type à commutation de circuits adaptés pour gérer des flux audio monophoniques, ce qui se traduit par des communications téléphoniques en mode monophonique.

Des réseaux et service téléphoniques ou visiophoniques se développent, qu'il est possible d'utiliser avec des terminaux de type PC (Personal Computer) munis de logiciels de téléphonie ou visiophonie VoIP, ou avec des terminaux téléphoniques dotés de moyens d'émission stéréophonique d'un flux audio (systèmes de haut-parleurs ou d'oreillettes stéréophoniques par exemple).

On connaît notamment le document US 6,408,327 qui décrit un système d'audioconférence offrant des fonctionnalités de synthèse stéréophonique pour placer virtuellement différents interlocuteurs afin de le distinguer en jouant sur la répartition de la puissance des différentes voix sur deux canaux.

Cependant, en pratique, les propriétés stéréophoniques de certains terminaux ne peuvent être utilisées que dans la mesure où ces terminaux sont engagés dans une communication avec au moins un autre dispositif (terminal ou serveur) disposant de propriétés stéréophoniques. Or, encore aujourd'hui, la plupart des communications téléphoniques engagent au moins un dispositif (terminal ou serveur) ne disposant pas de propriétés stéréophoniques, et les flux audio d'une communication téléphonique sont de ce fait des flux monophoniques.

L'invention offre une solution technique qui ne présente pas ces inconvénients.

Pour cela l'invention propose un procédé de transfert d'un flux audio entre au moins deux dispositifs, comprenant les étapes suivantes :
- une étape de mise en relation d'un premier avec au moins un deuxième dispositif, et
- une étape de transfert d'un flux audio depuis le premier dispositif vers le deuxième dispositif,
caractérisé en ce qu'il comprend également les étapes suivantes :
- une étape de détermination au cours de laquelle il est constaté que le premier dispositif, ou un premier réseau auquel est connecté le premier dispositif ou un deuxième réseau auquel est connecté le deuxième dispositif est adapté pour la production ou le transfert d'un flux audio comprenant N canaux, et que le deuxième dispositif comprend un transducteur électroacoustique adapté pour recevoir un flux audio comprenant P canaux, et
- une étape de conversion au cours de laquelle un flux audio, émis par le premier dispositif ou transmis par le premier réseau ou transmis par le deuxième réseau, est converti en un flux audio comprenant P canaux.

Le procédé selon l'invention permet ainsi à l'utilisateur d'un dispositif doté de moyens de traitement de flux audio comprenant P canaux de profiter des propriétés de son dispositif, y compris lorsque son correspondant dispose d'un dispositif ou d'un réseau doté de propriétés audio différentes, voire inférieure.

L'étape de détermination pourra avantageusement être réalisée pendant l'étape de mise en relation. Des informations habituellement échangées entre les dispositifs au cours de l'étape de mise en relation pourront ainsi être utilisées simultanément au cours de l'étape de détermination.

Plus généralement, l'étape de détermination pourra être réalisée à tout moment pendant une communication, éventuellement aprés une étape de transfert d'un flux audio. Ceci permet par exemple à un utilisateur du deuxième dispositif de se rendre compte qu'un flux audio que le deuxième dispositif reçoit a un nombre de canaux N inférieurs aux capacités de traitement audio P des moyens de traitement du deuxième dispositif.

Dans un mode particulier de mise en oeuvre de l'invention, l'étape de conversion n'est réalisée que si N est inférieur à P, c'est-à-dire si le premier dispositif et / ou le premier réseau et / ou le deuxième réseau dispose de capacités audio inférieures aux capacités audio du deuxième dispositif. On évite ainsi de réaliser une étape de conversion lorsque son effet, l'augmentation du nombre de canaux du flux audio, ne présente pas d'intérêt pour le deuxième terminal.

L'étape de conversion pourra être réalisée pendant l'étape de transfert. L'étape de transfert est ainsi rendue totalement transparente pour le deuxième dispositif.

L'étape de conversion pourra en outre comprendre une spatialisation sonore du flux monophonique. Cette technique permet de donner un effet d'espace à un flux audio.

Egalement, un filtre binaural pourra être mis en oeuvre au cours de l'étape de transfert. Un tel filtre permet de donner un effet stéréophonique à un flux audio monophonique.

L'étape de détermination et / ou l'étape de conversion (sont) peuvent être mise(s) en oeuvre sous la forme de tâche(s) logicielle(s) susceptible(s) d'être implémentée(s) dans :
- un périphérique de sortie audio du deuxième dispositif, comprenant un transducteur électroacoustique stéréophonique, tel que par exemple un périphérique comprenant au moins deux haut-parleurs, ou
- le deuxième terminal, ou
- un équipement d'accès du deuxième terminal au deuxième réseau de communication, ou
- un élément d'entrée du deuxième réseau de communication, ou
- un serveur de ressources vocales du deuxième réseau de communication, ou
- un serveur d'application du deuxième réseau, dédié à la mise en oeuvre du procédé.

L'étape de détermination peut quant à elle être mise en oeuvre sous la forme d'une tâche logicielle susceptible d'être implémentée dans un serveur de traitement d'appel du deuxième réseau de communication, et dans lequel l'étape de conversion est effectuée par un serveur de média du dit deuxième réseau de communication à chaque réception d'un flux audio monophonique émis par le premier terminal et / ou transmis par le premier réseau.

L'invention concerne également un système de communication comprenant :
- des moyens de mise en relation d'un premier dispositif avec au moins un deuxième dispositif, et
- des moyens de transfert d'un flux audio depuis le premier dispositif vers le deuxième dispositif,
caractérisé en ce qu'il comprend également :
- des moyens de détermination, aptes à constater que le premier dispositif, ou un premier réseau auquel est connecté le premier dispositif ou un deuxième réseau auquel est connecté le deuxième dispositif est adapté pour la production ou le transfert d'un flux audio comprenant N canaux, et que le deuxième dispositif comprend un transducteur électroacoustique adapté pour recevoir un flux audio comprenant P canaux, et • des moyens de conversion pour convertir un flux audio émis par le premier dispositif ou transmis par le premier réseau ou transmis par le deuxième réseau, en un flux audio comprenant P canaux.

L'invention sera mieux comprise et d'autres caractéristiques et avantages apparaîtront à la lecture de la description qui va suivre, d'exemples de mise en oeuvre d'un procédé de connexion et d'un système de connexion selon l'invention.

La description est à lire en relation aux dessins annexés dans lesquels :
- la figure 1 est un schéma bloc montrant une mise en oeuvre d'un procédé connu de transfert d'un flux audio entre deux terminaux engagés dans une communication,
- la figure 2 est un schéma bloc montrant une mise en oeuvre d'un procédé selon l'invention de transfert d'un flux audio entre deux terminaux engagés dans une communication.

Le procédé selon l'invention va être décrit ci-dessous tout d'abord dans le cadre d'un exemple de communication entre des premier et deuxième dispositifs matérialisés par des premier et deuxième terminaux particuliers.

Dans d'autres modes de mise en oeuvre de l'invention, les dispositifs concernés pourront être en nombre supérieur à deux, et inclure des serveurs, par exemple des serveurs d'information de type Audiotel ou encore des serveurs de messagerie vocale, etc.

Le premier terminal est ici relié à un premier réseau, de type réseau téléphonique commuté (réseau RTC) non adapté pour le transfert de flux audio stéréophoniques. Dans un exemple concret le premier terminal est un téléphone fixe classique 100 dont au moins une base est reliée par un fil à une prise téléphonique du réseau RTC.

Le deuxième terminal est ici relié à un deuxième réseau, de type réseau téléphonique de Voix sur IP ; il comprend deux ports d'entrée audio adaptés pour recevoir un flux audio stéréophonique transmis sur deux canaux audio du réseau de Voix sur IP et il comprend également un transducteur électroacoustique stéréophonique. Le deuxième terminal est par exemple un téléphone portable 200 relié par une liaison WIFI à un boîtier de connexion 210 au deuxième réseau et comprenant un transducteur électroacoustique de type casque stéréophonique à deux oreillettes.

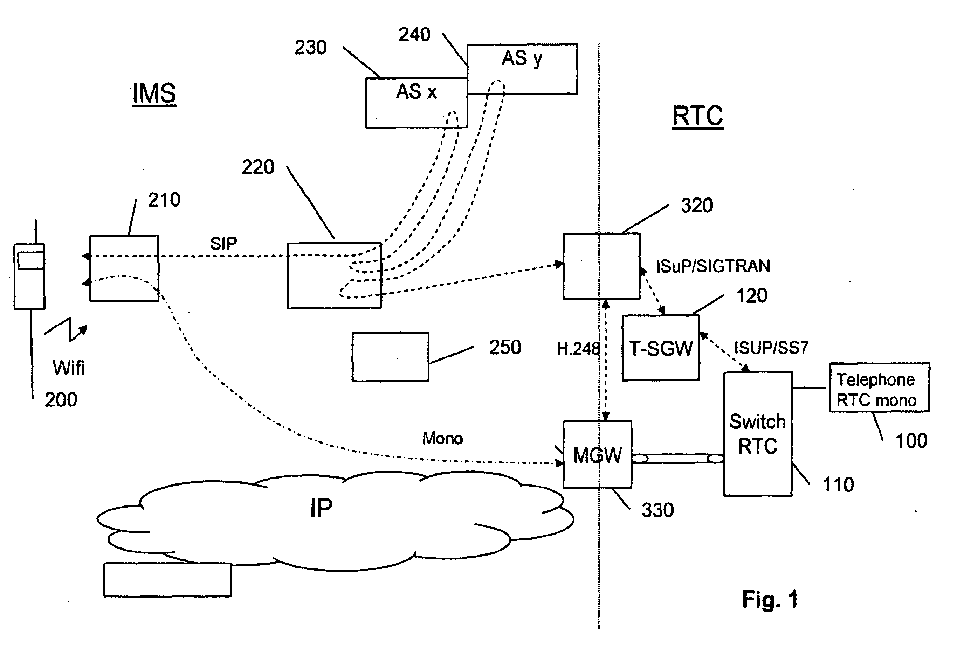

Sur la figure 1 est schématisé le cheminement classique d'un signal audio entre l'utilisateur du premier terminal 100 et l'utilisateur du deuxième terminal 200 lors d'une communication téléphonique.

Dans l'exemple, le premier réseau est le réseau RTC utilisant un protocole de signalisation ISUP (Integrated Services Digital Network Signalling User Part). Il comprend notamment un commutateur 110, qui est point de connexion du premier terminal au réseau RTC, un élément d'entrée 120 de gestion de demandes de mise en relation (T-SGW) ayant principalement une fonction de passerelle pour transporter la signalisation d'appel ISUP sur des couches protocolaires différentes et une fonction de transmission d'une demande de mise en relation émise par ou pour le premier terminal.

Le deuxième réseau est un réseau de Voix sur IP dont l'architecture est de type IMS (pour IP Multimedia Subsystem) utilisant un protocole de signalisation SIP (Session Initiation Protocol). Il comprend un élément d'entrée 220 (P-I-S-CSCF) ayant pour principales fonctions d'identifier et d'enregistrer le terminal 200 sur le deuxième réseau, et de transmettre une demande de mise en relation émise par ou pour le terminal 200.

Le deuxième réseau peut également comprendre un ou plusieurs serveurs 230, 240 susceptibles de fournir à l'utilisateur du deuxième terminal un ou plusieurs services applicatifs tels que par exemple un service de messagerie vocale ou un service complémentaire de téléphonie tel que la gestion du double appel. Le deuxième réseau peut également comprendre un serveur de ressources vocales 250, ayant par exemple pour fonction d'émettre un flux audio contenant un message vocal, d'effectuer une reconnaissance vocale sur un flux audio, ou de mixer des flux audio reçus dans le cadre d'une communication en mode conférence.

Les deux réseaux sont interconnectés par l'intermédiaire d'une passerelle 320 de mise en relation et d'une passerelle 330 de données.

Un procédé de communication entre l'utilisateur du premier terminal et l'utilisateur du deuxième terminal comprend principalement deux étapes, une étape de mise en relation et une étape de transfert de flux audio d'un terminal à l'autre.

L'étape de mise en relation se fait de la manière suivante. Le deuxième terminal émet une demande de mise en relation selon le protocole SIP, cette demande est transmise par l'élément 210 puis par l'élément d'entrée 220 à la passerelle 320, qui convertit cette demande dans le protocole ISUP et la transmet à l'élément d'entrée 120 qui la transmet finalement au premier terminal au travers du commutateur 110. Lorsque l'utilisateur du premier terminal accepte la mise en relation (en activant le combiné téléphonique du premier terminal), une acceptation de la mise en relation est transmise au deuxième terminal par un chemin inverse, par l'intermédiaire de l'élément 110, de l'élément 120, puis de la passerelle 320 puis de l'élément 220 puis par l'élément 210. Bien sûr, si la communication est à l'initiative de l'utilisateur du premier terminal, la demande de mise en relation est émise par le premier terminal et transmise au deuxième terminal, et l'acceptation de la mise en relation suit le chemin inverse.

Après réception par le deuxième terminal de l'acceptation de la mise en relation, un canal de communication est établi entre le deuxième terminal, le boîtier de connexion 210, la passerelle de données 330 et le commutateur 110, le premier terminal et le transfert de signaux audio entre les utilisateurs se fait par transfert de flux audio sur le canal de communication entre les deux terminaux. L'étape de transfert peut être répétée plusieurs fois au cours de la communication. Dans le réseau RTC et dans le réseau de téléphonie IP, les flux audio sont monophoniques et transitent sur un unique canal.

Un procédé de communication selon l'invention se distingue d'un procédé antérieur en ce qu'il comprend également les étapes suivantes :
- une étape de détermination au cours de laquelle il est constaté que le premier dispositif, ou un premier réseau auquel est connecté le premier dispositif ou un deuxième réseau auquel est connecté le deuxième dispositif est adapté pour la production ou le transfert d'un flux audio comprenant N canaux, et que le deuxième dispositif comprend un transducteur électroacoustique adapté pour recevoir un flux audio comprenant P canaux, et
- une étape de conversion au cours de laquelle un flux audio, émis par le premier dispositif ou transmis par le premier réseau ou transmis par le deuxième réseau, est converti en un flux audio comprenant P canaux.

Dans l'exemple choisi :
- l'étape de détermination est réalisée pendant l'étape de mise en relation et
- l'étape de conversion est réalisée pendant l'étape de transfert et uniquement si P est supérieur à N.

Dans l'exemple choisi, le premier terminal, de type téléphone fixe classique, ne comprend pas de moyens de production d'un flux audio stéréophonique. Le premier réseau auquel le premier terminal est connecté est le réseau RTC, apte au transfert de flux audio monophoniques mais ne disposant de moyens de transfert de flux audio stéréophoniques. N est donc égal à 1, correspondant à un flux monophonique. Le deuxième terminal comprend quant à lui un transducteur électroacoustique stéréophonique, adapté donc pour recevoir un flux audio comprenant P = 2 canaux.

L'étape de détermination aboutit donc à une conclusion positive.

L'étape de conversion est exécutée ensuite, à chaque transfert d'un flux audio du premier terminal vers le deuxième terminal.

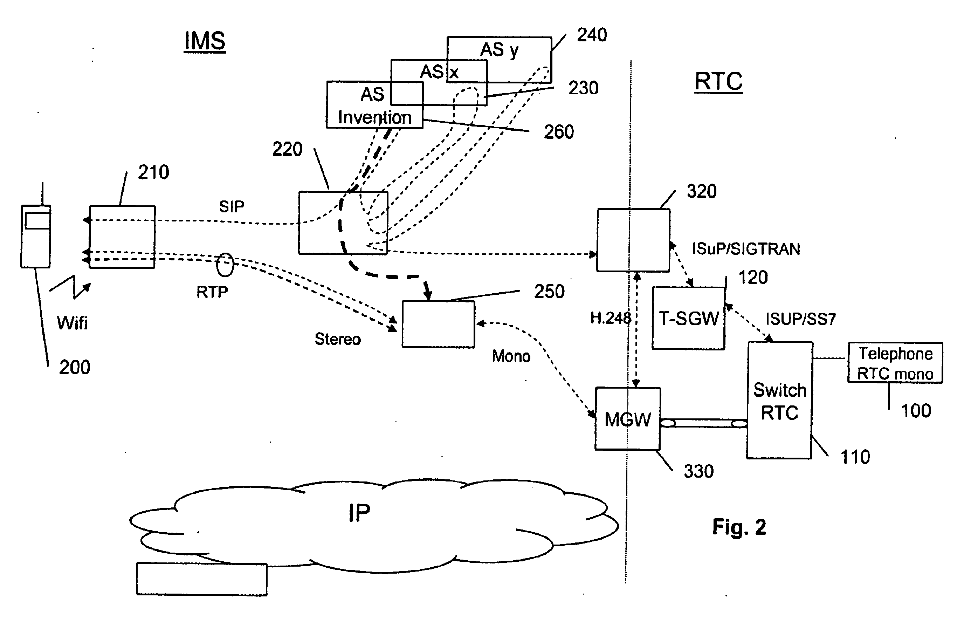

La figure 2 montre un mode de mise en oeuvre du procédé selon l'invention par l'intermédiaire d'un serveur d'application 260.

Dans ce mode de mise en oeuvre, l'étape de détermination est réalisée par des moyens de détermination situés dans le serveur d'application 260, et l'étape de conversion est réalisée par des moyens de conversion situés dans le serveur de ressources vocales 250 du deuxième réseau et commandés par le serveur d'application 260.

Dans l'exemple choisi, l'étape de détermination est réalisée pendant l'étape de mise en relation des deux terminaux de la manière suivante :
- lorsque l'élément d'entrée 220 reçoit une demande de mise en relation, il la transmet aux moyens de détermination du serveur 260 qui déterminent, à partir de paramètres de la dite demande de mise en relation, les propriétés audio (le nombre de canaux susceptibles d'être traités en parallèle pour un même son) du terminal ayant émis la demande de mise en relation et du réseau auquel le dit terminal est connecté ; dans l'exemple choisi, P=2 est ainsi déterminé pour le deuxième terminal, puis
- lorsque l'élément d'entrée 220 reçoit l'acceptation de mise en relation, il la transmet aux moyens de détermination du serveur 260 qui déterminent, à partir de paramètres de la dite acceptation de mise en relation, les propriétés audio du terminal ayant émis l'acceptation de mise en relation ; dans l'exemple choisi, N=1 est ainsi déterminé pour le premier terminal, puis
- les moyens de détermination du serveur 260 décident si l'étape de conversion doit être effectuée ou pas.

Si l'étape de conversion doit être effectuée, les moyens de détermination du serveur 260 commandent les moyens de conversion du serveur 250 de ressources vocales en conséquence.

Si l'étape de conversion ne doit pas être effectuée, parce que les propriétés audio du deuxième terminal sont inférieures ou égales aux propriétés audio du premier terminal, du premier réseau et / ou du deuxième réseau, alors l'étape de transfert s'effectue comme dans les procédés antérieurs, sans passer par le serveur de ressources vocales 250.

Dans l'exemple choisi, l'étape de conversion est réalisée par les moyens de conversion du serveur de ressources vocales 250, à chaque transfert d'un flux audio depuis le premier terminal vers le deuxième terminal :
- le flux monophonique émis par le premier terminal 100 est transmis aux moyens de conversion du serveur 250 par l'intermédiaire du commutateur 110 et de la passerelle de données 330,
- les moyens de conversion convertissent le flux monophonique en un flux stéréophonique,
- les moyens de conversion transmettent le flux stéréophonique vers le deuxième terminal 200 par l'intermédiaire d'un unique canal de communication comprenant deux canaux audio.

La conversion du flux monophonique comprend la spatialisation sonore du flux monophonique, par exemple par l'utilisation d'un filtre binaural.

La spatialisation sonore d'un signal audio monophonique vise à donner l'illusion à un auditeur que la ou les sources sonores sont à des dispositions bien précises de l'espace et plongées dans un espace ayant des propriétés acoustiques particulières (réverbération, occlusion, etc.). La synthèse binaurale est une technique particulière de positionnement de sources sonores permettant une spatialisation. Des détails sur cette technique peuvent notamment être trouvés dans le brevet FR 2 851 879, ou dans le livre de Blauert, J., "Spatial hearing - the psychacoustics of human sound localization , The MIT Press, Cambridge, MA, (1983)").

Dans le mode de mise en oeuvre de l'invention de la figure 2, la conversion du flux est effectuée par des moyens de conversion compris dans le serveur de ressources vocales 250 du deuxième réseau, auquel est connecté le terminal ayant des moyens acoustiques stéréophoniques.

Bien d'autres mises en oeuvre de l'invention peuvent être envisagées.

Dans un autre mode de mise en oeuvre, la conversion est effectuée par des moyens de conversion compris dans le serveur 260 d'application. Le serveur d'application effectue dans ce cas toutes les étapes du procédé spécifiques à l'invention, en particulier l'étape de détermination et l'étape de conversion.

Dans un autre mode de mise en oeuvre, l'étape de détermination et l'étape de conversion peuvent être réalisées à la fin de l'étape de transfert, au-delà du deuxième réseau :
- par des moyens de détermination et des moyens de conversion compris dans le boîtier de connexion 210 du deuxième dispositif au deuxième réseau, ou
- par des moyens de détermination et des moyens de conversion compris dans le deuxième dispositif, ou
- par des moyens de détermination et des moyens de conversion compris dans le périphérique de sortie acoustique du deuxième dispositif.

On rappelle que le premier dispositif et / ou le deuxième dispositif peut (peuvent) être un (des) terminaux, mais aussi un (des) serveurs.

Les moyens de détermination et les moyens de conversion peuvent être par exemple mis en oeuvre sous la forme d'une tâche logicielle implémentée selon le mode de réalisation :
- dans l'équipement de connexion 210 du deuxième terminal au deuxième réseau
- dans le deuxième terminal,
- dans le périphérique de sortie acoustique du deuxième terminal,
- dans le serveur de ressources 250 du deuxième réseau, ou
- dans le serveur d'application 260.

Le premier réseau et le deuxième réseau peuvent être un seul et même réseau, de type Voix sur IP approprié pour le transfert de flux stéréophonique. L'invention présente dans ce cas un intérêt si le premier terminal ne dispose pas de moyens pour produire un flux audio stéréophonique, et les moyens de conversion peuvent être implémentés à tout endroit le long du canal de transfert d'un flux audio entre le premier et le deuxième terminal.

Le premier réseau et le deuxième réseau peuvent être aussi un seul et même réseau non approprié pour le transfert de flux audio stéréophonique. Les moyens de détermination et les moyens de conversion peuvent être dans ce cas implémentés dans le deuxième terminal, ou dans le périphérique de sortie acoustique du deuxième terminal.

L'exemple de la figure 2 utilise le protocole ISUP sur le premier réseau, et le protocole SIP sur le deuxième réseau. Bien sûr, tout autre protocole de communication approprié au premier et / ou au deuxième réseau peut être employé.

On peut prévoir également que l'invention est mise en oeuvre non pas de manière systématique, mais seulement sur abonnement. Le serveur d'application 260 pourra dans ce cas comprendre des moyens de gestion des abonnés.

L'étape de mise en relation est réalisée en début d'une communication, en vue d'établir une communication entre les dispositifs. Dans l'exemple choisi, l'étape de détermination est réalisée en parallèle de l'étape de mise en relation. Mais l'étape de détermination peut également être réalisée au cours d'une communication, après une étape de mise en relation et une ou plusieurs étapes de transfert, par exemple à la demande de l'utilisateur du deuxième dispositif (par appui sur un bouton de commande par exemple), qui souhaiterait en cours de communication bénéficier des propriétés audio de son dispositif dont il n'a pas bénéficié au début de la communication. On renégocie ainsi en quelque sorte les propriétés de la communication en cours de communication.

Par ailleurs, on rappelle que l'invention peut être appliquée à tout transfert de flux audio de toute communication, téléphonique ou visiophonique, entre deux ou plus de deux dispositifs tels que des terminaux ou des serveurs.

## Revendications

1. Procédé de transfert d'un flux audio entre au moins deux dispositifs, comprenant les étapes suivantes :
- une étape de mise en relation d'un premier (100) avec au moins un deuxième (200) dispositif, et
- une étape de transfert d'un flux audio depuis le premier dispositif vers le deuxième dispositif,
**caractérisé en ce qu'**il comprend également les étapes suivantes :
- une étape de détermination au cours de laquelle il est constaté que le premier dispositif, ou un premier réseau auquel est connecté le premier dispositif ou un deuxième réseau auquel est connecté le deuxième dispositif est adapté pour la production ou le transfert d'un flux audio comprenant N canaux, et que le deuxième dispositif comprend un transducteur électroacoustique adapté pour recevoir un flux audio comprenant P canaux, et
- une étape de conversion au cours de laquelle un flux audio, émis par le premier dispositif ou transmis par le premier réseau ou transmis par le deuxième réseau, est converti en un flux audio comprenant P canaux.

2. Procédé selon la revendication 1, dans lequel l'étape de détermination est réalisée pendant l'étape de mise en relation.

3. Procédé selon la revendication 1, dans lequel l'étape de conversion n'est réalisée que si N est inférieur à P.

4. Procédé selon l'une des revendications 1 à 3, dans lequel l'étape de conversion est réalisée pendant l'étape de transfert.

5. Procédé selon l'une des revendications 1 à 4, dans lequel l'étape de conversion comprend une spatialisation sonore du flux audio.

6. Procédé selon la revendication 1 à 5, dans lequel un filtre binaural est mis en oeuvre au cours de l'étape de conversion.

7. Procédé selon l'une des revendications 1 à 6, dans lequel l'étape de détermination et/ou l'étape de conversion (sont) est mise(s) en oeuvre sous la forme de tâche(s) logicielle(s) susceptible(s) d'être implémentée(s) dans :
- un périphérique de sortie audio du deuxième dispositif (200), comprenant un transducteur électroacoustique stéréophonique, tel que par exemple un périphérique comprenant au moins deux haut-parleurs, ou
- le deuxième dispositif (200), ou
- un équipement d'accès (210) du deuxième dispositif au deuxième réseau, ou
- un élément d'entrée (220) du deuxième réseau, ou
- un serveur de ressources vocales (250) du deuxième réseau, ou
- un serveur d'application (260) du deuxième réseau, dédié à la mise en oeuvre du procédé.

8. Procédé selon l'une des revendications 1 à 7, dans lequel l'étape de détermination est mise en oeuvre sous la forme d'une tâche logicielle susceptible d'être implémentée dans un serveur de traitement d'appel du deuxième réseau de communication, et dans lequel l'étape de conversion est effectuée par un serveur de média du dit deuxième réseau de communication à chaque réception d'un flux audio monophonique émis par le premier dispositif et/ou transmis par le premier réseau.

9. Système de communication comprenant :
- des moyens de mise en relation d'un premier dispositif (100) avec au moins un deuxième dispositif (200), et
- des moyens de transfert d'un flux audio depuis le premier dispositif vers le deuxième dispositif,
**caractérisé en ce qu'**il comprend également :
- des moyens de détermination, aptes à constater que le premier dispositif, ou un premier réseau auquel est connecté le premier dispositif ou un deuxième réseau auquel est connecté le deuxième dispositif est adapté pour la production ou le transfert d'un flux audio comprenant N canaux, et que le deuxième dispositif comprend un transducteur électroacoustique adapté pour recevoir un flux audio comprenant P canaux, et
- des moyens de conversion pour convertir un flux audio émis par le premier dispositif ou transmis par le premier réseau ou transmis par le deuxième réseau, en un flux audio comprenant P canaux.

10. Système selon la revendication 9, dans lequel les moyens de détermination sont compris dans un serveur d'application (260).

11. Système selon l'une des revendications 9 ou 10, dans lequel les moyens de conversion sont compris dans un serveur d'application (260) ou dans un serveur de ressources vocales (250).

12. Dispositif de transfert d'un flux audio entre au moins un premier et un deuxième dispositifs mis en relation, un flux audio étant transféré depuis le premier dispositif vers le deuxième dispositif, **caractérisé en ce qu'**il comprend :
- des moyens de détermination, aptes à constater que le premier dispositif, ou un premier réseau auquel est connecté le premier dispositif ou un deuxième réseau auquel est connecté le deuxième dispositif est adapté pour la production ou le transfert d'un flux audio comprenant N canaux, et que le deuxième dispositif comprend un transducteur électroacoustique adapté pour recevoir un flux audio comprenant P canaux, et
- des moyens de conversion pour convertir un flux audio émis par le premier dispositif ou transmis par le premier réseau ou transmis par le deuxième réseau, en un flux audio comprenant P canaux.

13. Terminal comprenant un dispositif selon la revendication 12.

14. Serveur comprenant un dispositif selon la revendication 12.

## Patentansprüche

1. Verfahren zur Übertragung eines Audiostroms zwischen mindestens zwei Vorrichtungen, das die folgenden Schritte enthält:
- einen Schritt der Herstellung der Verbindung einer ersten (100) mit mindestens einer zweiten (200) Vorrichtung, und
- einen Schritt der Übertragung eines Audiostroms von der ersten Vorrichtung zur zweiten Vorrichtung,
**dadurch gekennzeichnet, dass** es ebenfalls die folgenden Schritte enthält:
- einen Bestimmungsschritt, während dessen festgestellt wird, dass die erste Vorrichtung, oder ein erstes Netzwerk, mit dem die erste Vorrichtung verbunden ist, oder ein zweites Netzwerk, mit dem die zweite Vorrichtung verbunden ist, für die Erzeugung oder die Übertragung eines N Kanäle enthaltenden Audiostroms geeignet ist, und dass die zweite Vorrichtung einen elektroakustischen Wandler enthält, der geeignet ist, um einen P Kanäle enthaltenden Audiostrom zu empfangen, und
- einen Umwandlungsschritt, während dessen ein von der ersten Vorrichtung gesendeter oder vom ersten Netzwerk übertragener oder vom zweiten Netzwerk übertragener Audiostrom in einen P Kanäle enthaltenden Audiostrom umgewandelt wird.

2. Verfahren nach Anspruch 1, wobei der Bestimmungsschritt während des Schritts der Verbindungsherstellung ausgeführt wird.

3. Verfahren nach Anspruch 1, wobei der Umwandlungsschritt nur ausgeführt wird, wenn N kleiner als P ist.

4. Verfahren nach einem der Ansprüche 1 bis 3, wobei der Umwandlungsschritt während des Übertragungsschritts ausgeführt wird.

5. Verfahren nach einem der Ansprüche 1 bis 4, wobei der Umwandlungsschritt eine akustische Raumanpassung des Audiostroms enthält.

6. Verfahren nach Anspruch 1 bis 5, wobei ein binaurales Filter während des Umwandlungsschritts verwendet wird.

7. Verfahren nach einem der Ansprüche 1 bis 6, wobei der Bestimmungsschritt und/oder der Umwandlungsschritt in Form einer/von logischen Task(s) durchgeführt wird/werden, die implementiert werden kann/können in:
- einem Audioausgang-Peripheriegerät der zweiten Vorrichtung (200), das einen stereophonen elektroakustischen Wandler enthält, wie zum Beispiel ein Peripheriegerät, das mindestens zwei Lautsprecher enthält, oder
- der zweiten Vorrichtung (200), oder
- einer Zugangsausrüstung (210) der zweiten Vorrichtung zum zweiten Netzwerk, oder
- einem Eingangselement (220) des zweiten Netzwerks, oder
- einem Sprachressource-Server (250) des zweiten Netzwerks, oder
- einem Anwendungsserver (260) des zweiten Netzwerks, der für die Durchführung des Verfahrens bestimmt ist.

8. Verfahren nach einem der Ansprüche 1 bis 7, wobei der Bestimmungsschritt in Form einer Logiktask durchgeführt wird, die in einem Anrufverarbeitungsserver des zweiten Kommunikationsnetzwerks implementiert werden kann, und wobei der Umwandlungsschritt von einem Medienserver des zweiten Kommunikationsnetzwerks bei jedem Empfang eines monophonen Audiostroms ausgeführt wird, der von der ersten Vorrichtung gesendet und/oder vom zweiten Netzwerk übertragen wird.

9. Kommunikationssystem, das enthält:
- Einrichtungen zur Herstellung der Verbindung einer ersten Vorrichtung (100) mit mindestens einer zweiten Vorrichtung (200), und
- Einrichtungen zur Übertragung eines Audiostroms von der ersten Vorrichtung zur zweiten Vorrichtung,
**dadurch gekennzeichnet, dass** es ebenfalls enthält:
- Bestimmungseinrichtungen, die feststellen können, dass die erste Vorrichtung, oder ein erstes Netzwerk, mit dem die erste Vorrichtung verbunden ist, oder ein zweites Netzwerk, mit dem die zweite Vorrichtung verbunden ist, für die Erzeugung oder die Übertragung eines N Kanäle enthaltenden Audiostroms geeignet ist, und dass die zweite Vorrichtung einen elektroakustischen Wandler enthält, der einen P Kanäle enthaltenden Audiostrom empfangen kann, und
- Umwandlungseinrichtungen, um einen von der ersten Vorrichtung gesendeten oder vom ersten Netzwerk übertragenen oder vom zweiten Netzwerk übertragenen Audiostrom in einen P Kanäle enthaltenden Audiostrom umzuwandeln.

10. System nach Anspruch 9, wobei die Bestimmungseinrichtungen in einem Anwendungsserver (260) enthalten sind.

11. System nach einem der Ansprüche 9 oder 10, wobei die Umwandlungseinrichtungen in einem Anwendungsserver (260) oder in einem Sprachressourcen-Server (250) enthalten sind.

12. Vorrichtung zur Übertragung eines Audiostroms zwischen mindestens einer ersten und einer zweiten in Verbindung gebrachten Vorrichtung, wobei ein Audiostrom von der ersten Vorrichtung zur zweiten Vorrichtung übertragen wird, **dadurch gekennzeichnet, dass** sie enthält:
- Bestimmungseinrichtungen, die feststellen können, dass die erste Vorrichtung oder ein erstes Netzwerk, mit dem die erste Vorrichtung verbunden ist, oder ein zweites Netzwerk, mit dem die zweite Vorrichtung verbunden ist, für die Erzeugung oder die Übertragung eines N Kanäle enthaltenden Audiostroms geeignet ist, und dass die zweite Vorrichtung einen elektroakustischen Wandler enthält, der geeignet ist, um einen P Kanäle enthaltenden Audiostrom zu empfangen, und
- Umwandlungseinrichtungen, um einen von der ersten Vorrichtung gesendeten oder vom ersten Netzwerk übertragenen oder vom zweiten Netzwerk übertragenen Audiostrom in einen P Kanäle enthaltenden Audiostrom umzuwandeln.

13. Endgerät, das eine Vorrichtung nach Anspruch 12 enthält.

14. Server, der eine Vorrichtung nach Anspruch 12 enthält.

## Claims

1. Method for transferring an audio stream between at least two devices, comprising the following steps:
- a step of connecting a first (100) with at least one second (200) device, and
- a step of transferring an audio stream from the first device to the second device,
**characterized in that** it also comprises the following steps:
- a determination step during which it is confirmed that the first device, or a first network to which the first device is connected or a second network to which the second device is connected, is suitable for producing or transferring an audio stream comprising N channels, and that the second device comprises an electroacoustic transducer suitable for receiving an audio stream comprising P channels, and
- a conversion step during which an audio stream, sent by the first device or transmitted by the first network or transmitted by the second network, is converted into an audio stream comprising P channels.

2. Method according to Claim 1, in which the determination step is carried out during the connection step.

3. Method according to Claim 1, in which the conversion step is carried out only if N is less than P.

4. Method according to one of Claims 1 to 3, in which the conversion step is carried out during the transfer step.

5. Method according to one of Claims 1 to 4, in which the conversion step comprises a sound spatialization of the audio stream.

6. Method according to Claim 1 to 5, in which a binaural filter is implemented during the conversion step.

7. Method according to one of Claims 1 to 6, in which the determination step and/or the conversion step (are) is implemented in the form of software task(s) that can be implemented in:
- an audio output peripheral of the second device (200), comprising a stereophonic electroacoustic transducer, such as, for example, a peripheral comprising at least two loudspeakers, or
- the second device (200), or
- an equipment item (210) for access from the second device to the second network, or
- an input element (220) of the second network, or
- a voice resource server (250) of the second network, or
- an application server (260) of the second network, dedicated to implementing the method.

8. Method according to one of Claims 1 to 7, in which the determination step is implemented in the form of a software task which can be implemented in a call handling server of the second communication network, and in which the conversion step is performed by a media server of said second communication network each time a monophonic audio stream sent by the first device and/or transmitted by the first network is received.

9. Communication system comprising:
- means for connecting a first device (100) with at least one second device (200), and
- means for transferring an audio stream from the first device to the second device,
**characterized in that** it also comprises:
- determination means, which can confirm that the first device, or a first network to which the first device is connected or a second network to which the second device is connected, is suitable for producing or transferring an audio stream comprising N channels, and that the second device comprises an electroacoustic transducer suitable for receiving an audio stream comprising P channels, and
- conversion means for converting an audio stream sent by the first device or transmitted by the first network or transmitted by the second network, into an audio stream comprising P channels.

10. System according to Claim 9, in which the determination means are included in an application server (260).

11. System according to one of Claims 9 or 10, in which the conversion means are included in an application server (260) or in a voice resource server (250).

12. Device for transferring an audio stream between at least one first and one second connected devices, an audio stream being transferred from the first device to the second device,
**characterized in that** it comprises:
- determination means, which can confirm that the first device, or a first network to which the first device is connected or a second network to which the second device is connected, is suitable for producing or transferring an audio stream comprising N channels, and that the second device comprises an electroacoustic transducer suitable for receiving an audio stream comprising P channels, and
- conversion means for converting an audio stream sent by the first device or transmitted by the first network or transmitted by the second network, into an audio stream comprising P channels.

13. Terminal comprising a device according to Claim 12.

14. Server comprising a device according to Claim 12.
